# EUROPEAN PATENT APPLICATION

(11) **EP 3 432 446 A1**
(43) Date of publication of application: **23.01.2019**
(21) Application number: 17788674.4
(22) Date of filing: 18.04.2017
(51) Int. Cl.: H02K 1/06, H02K 3/50, H02K 15/00, H02K 15/04

(54) **ARMATURE, END MODULE FOR ARMATURE, AND METHOD FOR ASSEMBLING ARMATURE**

(30) Priority: 29.04.2016 CN 201610284242
(71) Applicant: Shanghai EE Power Technology Co., Ltd., Pudong New District Shanghai 201209 (CN)
(72) Inventor: YANG, Fei, Shanghai 201209 (CN)
(74) Representative: Wang, Bo
(86) International application number: PCT/CN2017/080887
(87) International publication number: WO 2017/186022

(57) **Abstract**

An embodiment of the present disclosure may further provide an armature comprising: an iron core; a plurality of patch cords, each of the plurality of patch cords being disposed in a notch on the iron core independently; and at least one end module, wherein: each of the at least one end module includes a plurality of circuits; and the at least one end module is mounted to an end portion of the iron core along an axial direction such that the plurality of patch cords electrically connect to each other individually through a corresponding circuit of the plurality of circuit to form a winding. The present disclosure also provides at least one end module for an armature and a method for assembling an armature.

## Description

### CROSS REFERENCE

This application claims priority to Chinese Patent Application No. 201610284242.7, filed on April 29, 2016, the contents of which are hereby incorporated by reference in their entirety.

### TECHNICAL FIELD

The present disclosure relates to an armature, in particular, an armature for forming a winding using patch cords. The disclosure also relates to an end module for an armature and a method for assembling an armature.

### BACKGROUND

An armature is an important component that plays a critical and pivotal role in a mutual conversion of mechanical energy and electric energy of a motor. For an electric generator, the armature is a component that produces an electromotive force. For example, the armature is a rotor in a DC generator or a stator in an AC generator. For an electromotor, the armature is a component that generates the electromagnetic force, for example, the armature is a rotor in the DC motor. The armature may include a DC armature category and an AC armature category, which are used in DC motor and AC motor, respectively.

An armature mainly includes an armature winding and an armature iron core (iron core). The armature winding is a component that induces an electric potential and generates electromagnetic torque for electromechanical energy conversion. The armature iron core is a part of a main magnetic path, as well as a supporting component of the armature winding. The armature winding is embedded in notches of the armature iron core. In other words, the armature is a component that includes winding wires in the electric generator. The winding wires move relative to the magnetic field, so that an induced electromotive force may be generated in the winding wires in the electric generator, and electrified wires in the motor may rotate due to an Ampere force under the magnetic field.

Commonly used armature iron cores are generally made of silicon steel sheets. The silicon steel is a steel containing silicon (also referred to as Si). The silicon content of the silicon steel is 0.8-4.8%. The silicon steel is used to make the iron core of the armature since it has a strong magnetic permeability ability. In an electric coil, the silicon steel may generate a large magnetic induction intensity, so as to reduce the size of the armature. In addition, to reduce a vortex loss of the armature on alternating current, the iron core of the armature is generally laminated with silicon steel sheets insulated from each other, such that a vortex goes through a narrow loop with a small cross-section which increases a resistance for the vortex on the path. Also, a plurality of notches are set on the armature iron core for arranging the wires so as to form winding coils.

The armature winding is composed of a certain number of armature coils connected with each other according to a certain order. The armature winding is a circuit part of the DC motor, and is also a part that induces the electromotive force and generates electromagnetic torque for electromechanical energy conversion. The coil is wound with an insulated circular or rectangular cross-section wire. The upper and lower layers are embedded in the notch on the armature iron core. The upper and lower coils and between the coil and the armature core should be adequately insulated and pressed with a slot. The coil is also called an element. Two effective edges of each element that is capable of cutting a flux-induced electromotive force in the notch are referred to as element edges. The end portion is a portion of the element that is outside the notch. The end portion neither cuts the magnetic flux nor induces an electromotive force. Each element may have two outgoing lines including a head end and a tail end. In a prior art, the coil constituting the armature winding may be a continuous wire wound along the core. The coil may also be formed by first inserting a plurality of independent patch cords into the notches of the core and then electrically connecting the plurality of independent patch cords with each other.

For current armatures, technicians are willing to have an armature in a smaller size while maintaining their power and performance. That makes it possible to make a motor as small as possible. One of the main obstacles that currently prevent the motor from a smaller size is the size of the armature. The technicians have made various attempts at the selection of armature materials, the design of the armature structure, and so on, and have achieved specific achievements. However, it is clear that it is desirable that the armature may be designed to be smaller in the entire motor field. Especially, with the generation of current new technology requirements, small size and high power armatures or motors are an urgent technical problem that needs to be solved. It can even be said that the technological breakthroughs in some industries depend on the ability to provide a small enough armature or motor, such as an independent four-wheel drive technology in the electric vehicle industry. If a perfect independent four-wheel drive is achieved, the motor used to drive each wheel must be so small that it may be well mounted to the wheel and provide sufficient driving force.

### Summary

The present disclosure is intended to provide a novel armature that may have a smaller size while providing a same power.

In order to solve the above problem, an armature provided by an embodiment of the present disclosure includes: an iron core: a plurality of patch cords, each of the plurality of patch cords being disposed in a notch on the iron core independently; and at least one end module, wherein: each of the at least one end module includes a plurality of circuits, and the at least one end module is mounted to the end portion of the iron core along the axial direction such that the plurality of patch cords electrically connect to each other individually through the corresponding circuit of the plurality of circuits to form a winding.

The present disclosure is based on the inventor's unique understanding of the deficiencies of the prior art. In the prior art, to connect each independent patch cord in the armature to each other to form a coil or a winding, it is necessary to manually bend the end portion of each patch cord and weld the plurality of patch cords. It may be understood that the prior art process of connecting patch cords to each other cannot be mechanised or automated. The process is inefficient, and has a high rejection rate. Disadvantageously, since the patch cord must remain insulated, the end portion of the patch cord should not bend too much, otherwise the insulation of the patch cord may easily be damaged. However, too small bending angle may make the end portion of the patch cord too large along the axial direction of the iron core, which makes the overall size of the armature is large. The inventors have recognised that under certain conditions, for an armature coil, to maintain a power of the armature or a cutting magnetic flux, the effective side of the patch cord may not be reduced. Only the size of the end portion may be reduced.

The present disclosure creatively provides an end module in the armature. The end module may include a plurality of circuits. The end module is mounted to the end portion of the iron core along the axial direction such that the plurality of patch cords electrically connect to each other individually through the corresponding circuit of the plurality of circuits to form a winding. It may be understood that the circuit within the end module may provide a same circuit functionality by the circuit between the patch cords within end modules in the prior art. It is especially important that since the end module is pre-fabricated, its internal circuit may be arranged by various techniques in the prior art, such as an integrated circuit technology. The end module may be fabricated to have an unusually small size (along the axial direction of the iron core). That may effectively reduce the size of the armature. Also, since the end module may have electrical connection with the patch cord by various mature techniques in the prior art, such as an automatic soldering technology, it is possible to effectively improve production efficiency and yield without performing any bending of the patch cord.

In some embodiments, the at least one end module may have an integrated structure to provide a compact and reliable structure. Further, the at least one end module may be preferably flat in shape to provide an as small size as possible along the axial direction of the iron core.

In some embodiments, the at least one end module may include a plurality of bonding pads, each of which corresponds to one patch cord of the plurality patch cord that electrically connects to the corresponding circuit through a corresponding bonding pad of the plurality of bonding pads. Further, the corresponding bonding pad may be electrically connected to the one patch cord through welding. In some embodiments, the corresponding bonding pad may include a welded end and a circuit end. The welded end may be above a surface of the at least one end module and electrically connect to the corresponding patch cord through welding. And the circuit end may be located inside the at least one end module and in electrical connection with the corresponding circuit.

In some embodiments, each of the at least one end module may further include a thermal conductor layer, which is close to the iron core when the at least one end module is mounted to the iron core.

In some embodiments, the each of the at least one end module may include a plurality of openings, and each of the plurality of patch cords passes through a corresponding opening of the plurality of openings.

In some embodiments, each of the plurality of patch cords may be substantially a straight strip. Further, the at least one end module may include a first end module and a second end module. The first end module and the second end module may be mounted on two end portions along the axial direction of the iron core, respectively.

In some embodiments, each of the plurality of patch cords may have a substantial U-shape including two straight sections and one curved section. In some embodiments, the two straight sections may be disposed in the corresponding notches of the notch, and the curved section is located outside the notch. Further, the at least one end module may include one end module mounted on the end portion along the axial direction of the iron core.

An embodiment of the present disclosure further may provide an end module for an armature, comprising: an iron core and a plurality of patch cords. Each of the plurality of patch cords being disposed in a notch of the iron core independently. Each of the at least one end module may include a plurality of circuits. And may be mounted on an end portion along axial direction of the iron core such that the plurality of patch cords may be in electrical connection with each other individually through a corresponding circuit of the plurality of circuits to form a winding.

In some embodiments, the at least one end module may have an integral structure. Further, the at least one end module may be flat in shape.

In some embodiments, the at least end module may include a plurality of bonding pads, each of which corresponds to one patch cord of the plurality of patch cords that may electrically connect to the corresponding circuit through a corresponding bonding pad of the plurality of bonding pads. Further, the corresponding bonding pad may be connected to the one patch cord through welding.

In some embodiments, the corresponding bonding pad may include a welded end and a circuit end; The welded end may be above a surface of the at least one end module, and electrically connect to the corresponding patch cord through welding. And the circuit end may be located inside the at least one end module in an electrical connection with the corresponding circuit.

In some embodiments, each of the at least one end module may further include a thermal conductor layer, which may be close to the iron core when the at least one end module is mounted to the iron core.

In some embodiments, each of the at least one end module may include a plurality of openings, and each of the plurality of patch cords may pass through a corresponding opening of the plurality of openings.

An embodiment of the present disclosure may further provide a method for assembling an armature. The method may include providing an iron core and a plurality of patch cords. The method may include each of the plurality of patch cords being disposed in a notch of the iron core independently. The method may include providing at least one end module. The at least one end module may include a plurality of circuits. And the at least one end module may be mounted to an end portion of the iron core along axial direction such that the plurality of patch cords may electrically connect to each other individually through a corresponding circuit of the plurality of circuits to form a winding.

In some embodiments, the at least one end module may be mounted to an end portion of the iron core. The at last one end module may include passing each of the plurality of patch cords through a corresponding opening of the at least one end module; and soldering the each of the plurality of patch cords to a corresponding bonding pad of the at least one end module to form an electrical connection. The corresponding bonding pad may form an electrical connection with the corresponding circuit within the at least one end module.

In some embodiments, each of the plurality of patch cords may be substantially a straight strip. The at least one end module may include a first end module and a second end module. And the first end module and the second end module may be mounted on two end portions along axial directions of the iron core, respectively.

In some embodiments, each of the plurality of patch cords may have a substantially U-shape including two straight sections and one curved section. The two straight sections may be being inside corresponding notches of the iron core. The curved section may be being outside the notch, and the at least one end module may be mounted on the end portion along the axial direction of the iron core.

The advantages of the present disclosure are notably that the size of the armature may be effectively reduced, and the production efficiency and the yield may be effectively improved.

Other features and advantages of the present disclosure may be apparent from the description and appended drawings.

### BRIEF DESCRIPTION OF THE DRAWINGS

Detailed descriptions are given below in combination with the drawings in the present disclosure.
FIG. 1 and FIG. 2 show perspective views of an armature according to an embodiment of the present disclosure, wherein the armature shown in FIG. 1 is in an assembled state, and FIG. 2 is an exploded view of the armature.
FIG. 3 and FIG. 4 respectively shows an iron core of the armature as shown in FIG. 1, wherein FIG. 3 is a perspective view of the iron core, and FIG. 4 is a top view of the iron core.
FIG. 5 and FIG. 6 are schematic views showing an arrangement of a patch cord in the armature as shown in FIG. 1, wherein FIG. 5 is a perspective view of the patch cord arrangement, and FIG. 6 is a top view thereof.
FIG. 7 and FIG. 8 are schematic views showing an arrangement of an insulating paper in the armature as shown in FIG. 1, wherein FIG. 5 is a perspective view of the insulating paper arrangement, and FIG. 8 is a top view thereof.
FIG. 9 and FIG. 10 are schematic views of an end module of the armature as shown in FIG. 1, wherein FIG. 9 is a perspective view of the end module, and FIG. 10 is a top view of the end module.
FIG. 11 is an enlarged schematic view showing an axial sectional view of the end module as shown in FIG. 9, wherein the end module is partially omitted to clearly and concisely show the internal configuration of the end module, and the electrical connection relationship between a patch cord and a corresponding circuit within the end module is especially shown.
FIG. 12 shows a radial cross-sectional view of the end module as shown in FIG. 9.
FIG. 13a-13d show various exemplary patch cords that may be used for the armature as shown in FIG. 1.
FIG. 14a-14e show exemplary methods for assembling the armature as shown in FIG. 1.
FIG. 15 shows an armature according to another embodiment of the present disclosure.
FIG. 16 shows an armature according to yet another embodiment of the present disclosure.

### DETAILED DESCRIPTION

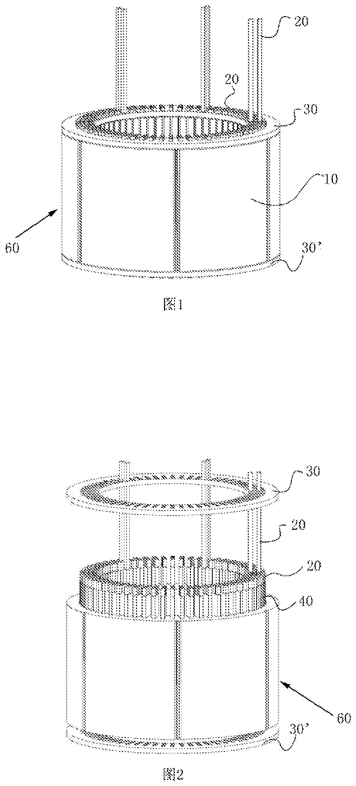

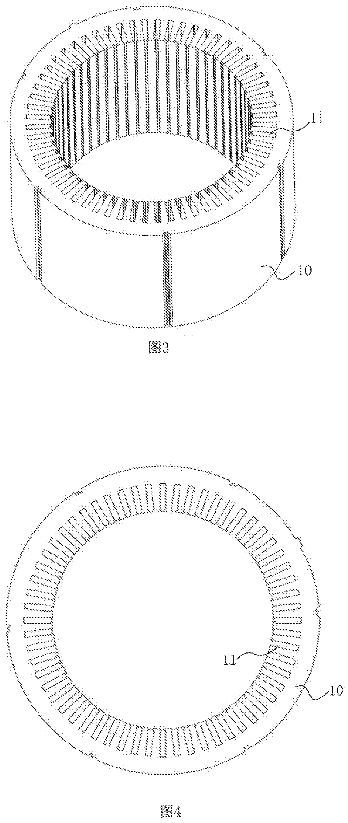

FIG. 1 and FIG. 2 show perspective views of an armature 60 according to one embodiment of the present disclosure. FIG. 1 shows the armature 60 in an assembled view, and FIG. 2 is an exploded view of the armature 60. As shown in the FIGs, the armature 60 may include an iron core 10, and each of two end portions of the iron core 10 along the axial direction includes an end module 30 (30'). The armature 60 shown in FIG. 1 may also include a plurality of patch cords 20. The plurality of patch cords 20 may be arranged in notches 11 (as shown in FIG. 3) of the iron core 10, and respectively pass through the end modules 30 (30') at both ends. These patch cords 20 may form a complete winding by an electrical connection between the corresponding circuits of the plurality of circuits in the end module. Each winding may include two patch cords protruding from the end module, and the patch cords may be used as outgoing lines of each winding. As shown in the FIGs, the armature may have six outgoing lines, that is, the illustrated armature has three windings. Each winding may be a coil formed by multiple patch cords electrically connecting with each other through the corresponding circuit in two end modules. Each winding may have two outgoing lines. As shown in FIG. 2, each patch cord 20 may be not directly in contact with the iron core in the notch of the iron core 10. Each patch cord 20 is covered by an insulating paper 40, which may be further explained below.

Referring further to FIG. 3 and FIG. 4, which illustrate the iron core 10 of the armature as shown in FIG. 1. FIG. 3 is a perspective view of the iron core 10 and FIG. 4 is a top view of the iron core 10. The iron core 10 may be laminated by a plurality of silicon steel sheets, and each silicon steel sheet may be insulated from each other. Each silicon steel sheet is provided with a plurality of notches 11 for arranging the patch cords 20. Except for silicon steel sheet, the material of the iron core 10 may include pure iron, mild steel, silicon steel, iron alloy, iron alloy, amorphous alloy, and microcrystalline alloy, etc. Those skilled in the art may understand that different materials may lead to different properties of the iron core 10, and thus the armature may be fabricated by selecting a suitable material depending on a specific use environment.

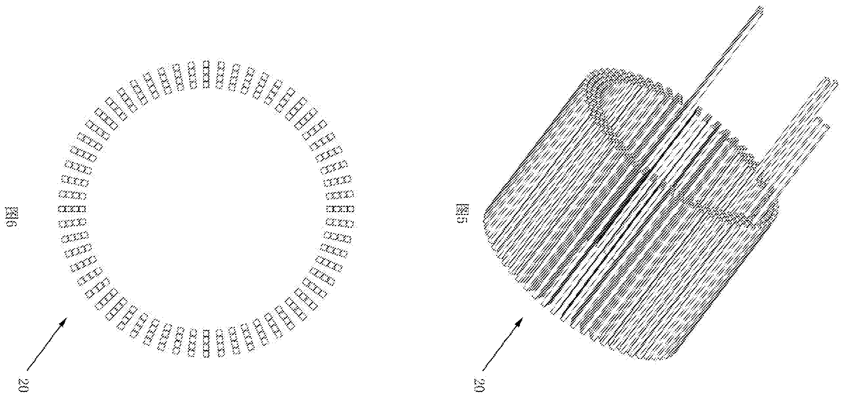

Referring further to FIG.5 and FIG.6, which are schematic views showing the arrangement of the patch cords 20 in the armature as shown in FIG. 1. FIG. 5 is a perspective view of the arrangement of the patch cords 20, and FIG. 6 is a top view thereof. As shown in the FIGs, the plurality of patch cords 20 may be arranged substantially coaxially and have a substantially uniform spacing between any two of the plurality of patch cords 20. However, those skilled in the art may understand that the arrangement of these patch cords may also have other different configurations.

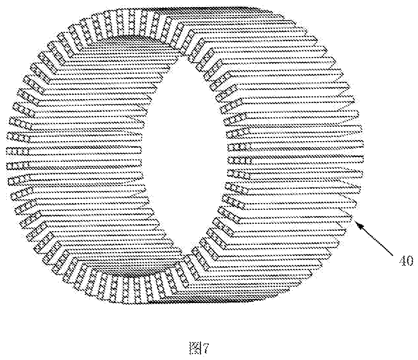

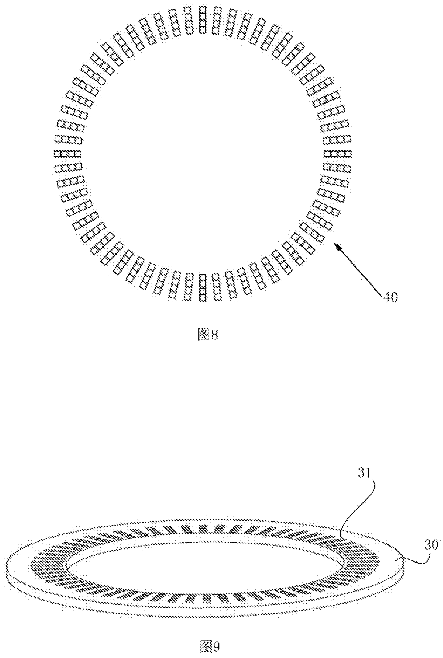

Referring further to FIG. 7 and FIG. 8, which are schematic views showing the arrangement of the insulating paper 40 in the armature as shown in FIG. 1, wherein FIG. 5 is a perspective view of an arrangement of the insulating paper 40, and FIG. 6 is a top view thereof. As mentioned earlier, each patch cord is placed in an iron core's notch. However, to ensure insulation between the patch cords and insulation between the patch cords and the iron core, each patch cord is wrapped by the insulating paper 40. In general, the insulating paper 40 is folded from a single sheet with an insulating property, and may have substantially the same cross-section as the patch cords 20. Materials of the insulating paper 40 and methods for folding the insulating paper 40 are well-known in the art. As shown in the FIGs, these folded insulating papers 40 may be arranged substantially coaxially and have a substantially uniform spacing between any two of the insulating papers 40, which is consistent with the arrangement of patch cords 20 in the iron core 10. Similarly, those skilled in the art may understand that the arrangement of these insulating papers 40 may also have other different configurations corresponding to the plurality of patch cords 20.

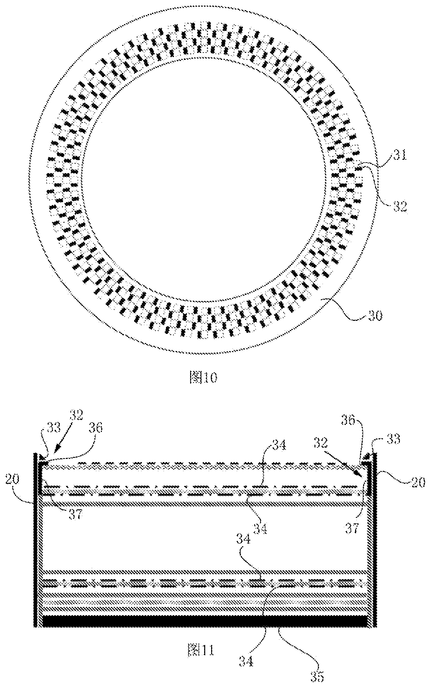

Referring further to FIG.9 and FIG.10, which are schematic views of the end module 30 of the armature 60 as shown in FIG. 1. FIG. 9 is a perspective view of the end module 30, and FIG. 10 is a top view of the end module 30. The end module 30 and the end module 30' shown in FIG. 1 may be different in specific circuit designs, but the end module 30 and the end module 30' may have a same principle and a same structural scheme. Therefore, after understanding the structure and principle of one of the two end modules, those skilled in the art can, of course, understand the design requirements and specific contents of another. For the sake of brevity, only the end modules 30 is described. As shown in the FIGs, the end module 30 is integrally formed as a generally flat annular shape with an inner diameter and an outer diameter that substantially coincide with the iron core 10. The end module 30 is provided with a plurality of axial openings 31 for the patch cords 20 to pass through. The position of each opening 31 may correspond to the position of each patch cord 20 in the iron core 10. Each opening 31 may be provided with a bonding pad 32 to form an electrical connection with the patch cord 20 through a bonding tip 33 (as shown in FIG. 11), thereby further form an electrical connection with the circuit 34 in the end module 30 (as shown in FIG. 11) via the bonding pad 32, which may be described in further detail later in the present disclosure.

Referring further to FIG. 11, which is an enlarged schematic view showing an axial sectional view of the end module as shown in FIG. 9. The end module is partially omitted to clearly and concisely show the internal configuration of the end module 30, and especially shows the electrical connection relationship between the patch cord 20 and a corresponding circuit 34 within the end module. As shown in FIG. 11, a bonding pad layer, a circuit layer and a thermal conductor layer 35 may be respectively located from top to bottom along with the axial direction of the end module 30. The bonding pad layer may be composed of a plurality of independent bonding pads 32, and the bonding pads 32 is composed of a conductive material. As shown in FIG. 11, the bonding pad 32 may include a welded end 36 and a circuit end 37. The welded end 36 may be on the surface of the end module and electrically connected to the patch cord 20 via the boding tip 33 generated by welding during assembling the armature. Moreover, the circuit end 37 is located inside the end module and electrically connected with the corresponding circuit 34. Only two circuit layers are shown in FIG. 11. Each circuit layer may comprise a plurality of independent circuits 34. However, the number of the circuit layers may vary as needed, depending on a connection requirement between the plurality of patch cords 20. An insulating layer is disposed between the respective layers. The insulating layer may be an insulating paste, or an insulating fibre to provide electrical insulation while preventing loss of insulation due to overheating as needed. The thermal conductor layer 35 may be located on the other surface of the end module 30 opposite to the bonding pad 32 layer. The thermal conductor layer 35 abuts the iron core 10 when the end module 30 is mounted onto the iron core 10.

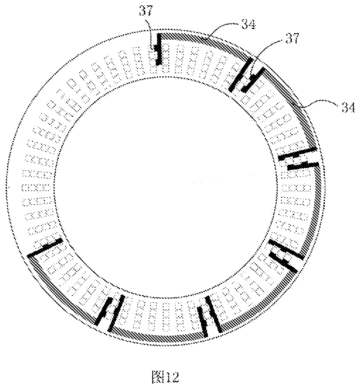

Referring further to FIG. 12, a radial cross-sectional view of the end module 30 of FIG. 9 is shown. As shown in FIG. 12, a plurality of circuits 34 may be arranged in the end module 30. The plurality of circuits 34 are electrically connected to the circuit terminals 36 of the corresponding bonding pad 32. Thus, when the two patch cords 20 are electrically connected to the soldering ends 36 of the corresponding pads 32 by the bonding tips 33, the two patch cords 20 may be connected to each other by the circuit 34 in the end module 30. The two ends of the iron core 10 of the armature 60 may be respectively provided with an end module. The end portion of the patch cord 20 may be electrically connected with other patch cords through the corresponding circuit in the end module corresponding to the end portion. Moreover, another end portion of the patch cord may be electrically connected with another patch cord through the corresponding circuit in the corresponding another end module. Thus, a plurality of patch cords may be sequentially connected by corresponding circuits in the two end modules 30 and 30', until connected to two longer patch cords 20 (see FIG. 1) used as lead wires, thereby forming a complete coil (winding). It is important that since the end module is pre-fabricated, the circuit 34 inside the end module 30 may be arranged according to various techniques in the prior art, such as a printed circuit technology or an integrated circuit technology. The end module 30 may be fabricated to have an unusually small size (along an axis of the iron core 10). That may effectively reduce the size of the armature 60. Since the end module may be electrically connected with the patch cord by various mature techniques in the prior art, such as automatic soldering technology, it is possible to improve production efficiency and yield without performing any bending of the patch cord.

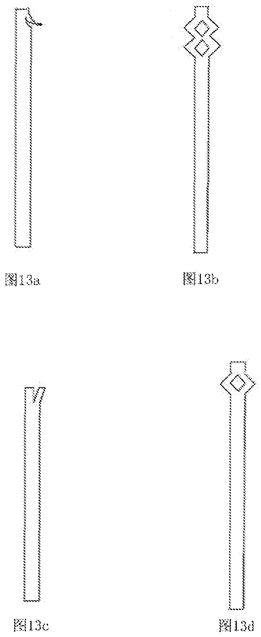

Referring further to FIGs. 13a-13d, which show various exemplary patch cords 20 that may be used with the armature 60 as shown in FIG. 1. As shown in the FIGs, these patch cords may be generally straight. The configurations of the end modules are different. The patch cord of FIG. 13a may be a hook-shaped end portion. The patch cord of 13b may be a double-eye type end portion. The patch cord of 13c may be a Y-shaped end portion, and the patch cord of 13d may be a fish-eye type end portion. These end portion configurations may be used for one end portion of the patch cord or both end portions of the patch cord. Moreover, the plurality of patch cords may also be selected for other suitable end configurations to meet specific needs, such as facilitating soldering. Moreover, those skilled in the art may understand that the patch cord has various suitable cross sections, but is preferably a flat patch cord with a square cross-section.

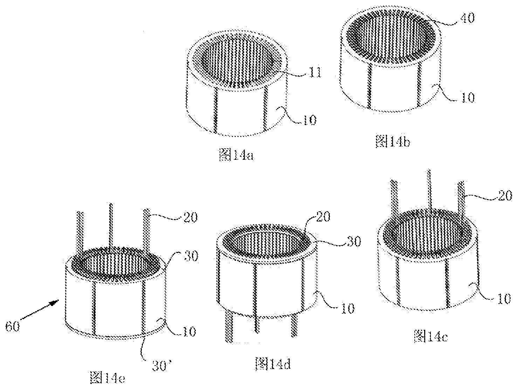

Referring to FIGs. 14a-14e, which illustrate two exemplary methods for assembling the armature as shown in FIG. 1. In FIG. 14a, the core 10 is provided. In FIG. 14b, the insulating paper 40 may be arranged in each notch 11 of the iron core 10. In FIG. 14c, each of the plurality of patch cords 20 may be inserted into the corresponding insulating paper 40. In FIG. 14d, one end module 30 may be mounted onto one end of the iron core 10. Each of the patch cord 20 may be respectively inserted into a corresponding opening 31 in the end module 30. And the corresponding ends of the patch cords 20 may be welded to the welded ends of the corresponding bonding pad 32 on the end module 30. In FIG. 14e, another end module 30' may be mounted onto another end of the iron core 10. Similarly, each of the plurality of patch cords 20 may be inserted into a corresponding opening in the end module 30', and the corresponding end portions of the patch cords 20 may be welded to the welded ends of the corresponding pad on the end module 30'. The circuit arrangement of each end module is designed according to the windings that needed to be formed. Moreover, a person skilled in the art can design a corresponding circuit according to the described winding. It may be understood that the respective patch cords may be electrically connected to one another by respective circuits within the end module to form the corresponding windings based on the circuit arrangements within the end module. The end modules can be connected to the patch cords to form circuitial connections by various well-established techniques in the prior art, such as automated welding techniques. Since the method does not require any bending of the patch cords, the production efficiency and the yield can be effectively improved.

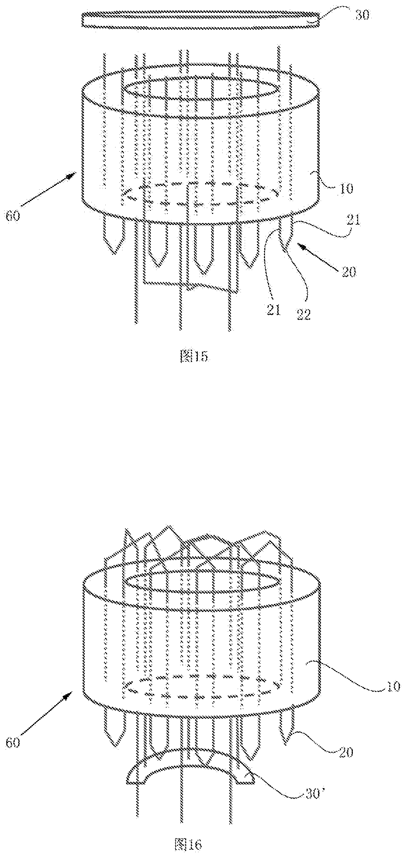

FIG. 15 illustrates an armature 60 according to another embodiment of the present disclosure. As shown in FIG. 15, the armature 60 may be similar to the embodiment of FIG. 1 and have an iron core 10, patch cords 20 disposed in the notches of the iron core 10, and an end module 30. The iron core 10 and the end module 30 in the armature 60 as shown in FIG. 15 may have the same configuration and function as the armature as shown in FIG. 1. However, the main difference between the armature as shown in FIG. 15 and the armature as shown in FIG. 1 is that the patch cords 20 are substantially U-shaped, each including two straight segments 21 and one curved segment 22. Each straight segment 21 may be arranged in one of the notches. The curved section 22 may be located outside the notch. Moreover, accordingly, only one end module 30 may be mounted on one axial end of the iron core 10. It can be understood that since the armature uses U-shaped patch cords, the plurality of patch cords only need to be connected to each other at one end to form a complete coil or winding. Therefore, the armature only needs one end module.

FIG. 16 illustrates an armature 60 according to yet another embodiment of the present disclosure. As shown in FIG. 16, the armature 60 may be similar to the embodiment of FIG. 15 and have an iron core 10, patch cords 20 disposed in the notches of the iron core 10, and an end module 30. The core and patch cords in the armature as shown in FIG. 16 may have the same configuration and function as the armature shown in FIG. 15. However, the main difference between the armature as shown in FIG. 16 and the armature as shown in FIG. 15 is that the end portions of the patch cords 20 are not connected to each other by the end modules. The patch cords 20 are usually connected to each other via a conventional method such as turning, welding, or the like, at the end portions. Conversely, an end module 30' is provided on one end of the iron core 10, and the end module 30' is only used to connect a plurality of specific patch cords through a specific circuit to form a precision shaped line (such as a star point line, a bridge line, etc.).

The present disclosure has been shown and described in detail concerning the accompanying drawings and the preferred embodiments thereof. But the present disclosure is not limited to the embodiments, and other embodiments derived therefrom are also within the scope of the present disclosure.

## Claims

1. An armature, comprising:
an iron core;
a plurality of patch cords, each of the plurality of patch cords being disposed in a notch on the iron core independently; and
at least one end module, wherein:
each of the at least one end module includes a plurality of circuits, and
the at least one end module is mounted to an end portion of the iron core along an axial direction such that the plurality of patch cords electrically connect to each other individually through a corresponding circuit of the plurality of circuit to form a winding.

2. The armature of claim 1, wherein the at least one end module has an integrated structure.

3. The armature of claim 2, wherein the at least one end module is flat in shape.

4. The armature of claim 1, wherein the at least one end module includes a plurality of bonding pads, each of which corresponds to one patch cord of the plurality patch cord that electrically connects to the corresponding circuit through a corresponding bonding pad of the plurality of bonding pads.

5. The armature of claim 4, wherein the corresponding bonding pad is electrically connected to the one patch cord through welding.

6. The armature of claim 4, wherein:
the corresponding bonding pad includes a welded end and a circuit end;
the welded end protrudes above a surface of the at least one end module, and electrically connects to the corresponding patch cord through welding; and
the circuit end is located inside the at least one end module and in electrical connection with the corresponding circuit.

7. The armature of claim 1, wherein each of the at least one end module further includes a thermal conductor layer, which is close to the iron core when the at least one end module is mounted to the iron core.

8. The armature of claim 1, wherein the each of the at least one end module includes a plurality of openings, and each of the plurality of patch cords passes through a corresponding opening of the plurality of openings.

9. The armature of claim 1, wherein each of the plurality of patch cords is substantially a straight strip.

10. The armature of claim 9, wherein:
the at least one end module includes a first end module and a second end module;
the first end module and the second end module are mounted on two end portions along the axial direction of the iron core, respectively.

11. The armature of claim 1, wherein each of the plurality of patch cords has a substantial U-shape including two straight sections and one curved section, wherein the two straight sections are disposed inside the corresponding notches of the notch, and the curved section is located outside the notch.

12. The armature of claim 11, wherein the at least one end module includes one end module mounted on the end along the axial direction of the iron core.

13. An end module for an armature, the armature comprising:
an iron core; and
a plurality of patch cords, each of the plurality of patch cords being disposed in a notch of the iron core independently;
wherein:
each of the at least one end module includes a plurality of circuits; and is mounted on an end portion along axial direction of the iron core such that the plurality of patch cords are in electrical connection with each other individually through a corresponding circuit of the plurality of circuits to form a winding.

14. The end module of claim 13, wherein the at least one end module has an integral structure.

15. The end module of claim 14, wherein the at least one end module is flat in shape.

16. The end module of claim 13, wherein the at least end module includes a plurality of bonding pads, each of which corresponds to one patch cord of the plurality of patch cords that electrically connects to the corresponding circuit through a corresponding bonding pad of the plurality of bonding pads.

17. The end module of claim 16, wherein the corresponding bonding pad is connected to the one patch cord through welding.

18. The end module of claim 16, wherein:
the corresponding bonding pad includes a welded end and a circuit end;
the welded end protrudes above a surface of the at least one end module, and electrically connect to the corresponding patch cord through welding; and
the circuit end is located inside the at least one end module in an electrical connection with the corresponding circuit.

19. The end module of claim 13, wherein each of the at least one end module further includes a thermal conductor layer, which is close to the iron core when the at least one end module is mounted to the iron core.

20. The end module of claim 13, wherein each of the at least one end module includes a plurality of openings, and each of the plurality of patch cords passes through a corresponding opening of the plurality of openings.

21. A method for assembling an armature, comprising:
providing an iron core and a plurality of patch cords;
each of the plurality of patch cords being disposed in a notch of the iron core independently;
providing at least one end module, wherein the at least one end module includes a plurality of circuits; and
the at least one end module is mounted to an end portion of the iron core along axial direction such that the plurality of patch cords electrically connect to each other individually through a corresponding circuit of the plurality of circuits to form a winding.

22. The method of claim 21, wherein the at least one end module is mounted to an end portion of the iron core comprising:
passing each of the plurality of patch cords through a corresponding opening of the at least one end module; and
soldering the each of the plurality of patch cords to a corresponding bonding pad of the at least one end module to form an electrical connection, wherein the corresponding bonding pad forms an electrical connection with the corresponding circuit within the at least one end module.

23. The method of claim 21, wherein:
each of the plurality of patch cords is substantially a straight strip;
the at least one end module includes a first end module and a second end module; and
the first end module and the second end module are mounted on two end portions along axial directions of the iron core, respectively.

24. The method of claim 21, wherein
each of the plurality of patch cords has a substantially U-shape including two straight sections and one curved section, wherein
the two straight sections are being inside corresponding notches of the iron core;
the curved section is being outside the notch; and
the at least one end module is mounted on the end portion along the axial direction of the iron core.
